Europäisches Patentamt

European Patent Office

Office européen des brevets

(19)

(11) Publication number: **0 224 278 B1**

(12)    **EUROPEAN PATENT SPECIFICATION**

(45) Date of publication of patent specification: **08.05.91**    (51) Int. Cl.⁵: **G01C 23/00**

(21) Application number: **86201337.2**

(22) Date of filing: **29.07.86**

(54) Apparatus for generating an aircraft situation display.

(30) Priority: **20.11.85 US 800057**

(43) Date of publication of application:
**03.06.87 Bulletin 87/23**

(45) Publication of the grant of the patent:
**08.05.91 Bulletin 91/19**

(84) Designated Contracting States:
**DE FR GB IT NL**

(56) References cited:
**US-A- 2 892 180**
**US-A- 3 686 936**
**US-A- 3 970 829**
**US-E- 4 071 893**

(73) Proprietor: **The Boeing Company**
**P.O. Box 3707**
**Seattle Washington 98124(US)**

(72) Inventor: **Kelly, Brian Douglas**
**17304 NE 138th. Street**
**Redmond WA 98052(US)**
Inventor: **Veitengruber, James Edwin**
**5720-111 Ave. SE**
**Bellevue WA 98006(US)**
Inventor: **Mulally, Alan Roger**
**15203 186th. Ave. NE**
**Woodinville WA 98072(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

## Description

### TECHNICAL FIELD

The present invention relates to apparatus and methods for generating a visual display of aircraft operating flight limitations, and more particularly to a visual display which provides information of aircraft stall warning margin in relation to an indication of aircraft attitude and in conjunction with an indication of flight path angle.

### BACKGROUND OF THE INVENTION

Presently, there are several methods for indicating an impending aircraft stall situation. One method utilizes a computed stall warning airspeed which is identified by a symbol at a corresponding location on an airspeed indicator.

From US-A-2 892 180 an aircraft flight instrument is known in which in one single mechanical instrument a pitch attitude indicator, a roll attitude indicator and a angle of attack indicator are combined. The three indicators are not interrelated.

Another method of indicating a stall condition of an aircraft is the utilization of an angle of attack indicator which can be located in the aircraft cockpit, and which provides a direct indication of the aircraft flight situation in relation to a stall condition. An angle of attack indicator uses an indicating scale which may be scaled in arbitrary units. A pivotal vane typically located on the outside of the aircraft senses the current angle of attack of the airflow along the aircraft, and feeds the information, after proper scaling, to an angle of attack indicator. The stall angle of attack is sometimes indicated by a symbol on the angle of attack scale.

Warning devices such as stick shaker and stallhorns are also utilized to warn of an impending stall condition. These devices are typically actuated prior to the aircraft entering stall buffet in order to give the aircrew advanced warning of an impending stall condition. In the case of a stick shaker, when the aircraft first reaches the predetermined stall warning limit, a motor is activated which causes the aircraft control stick to begin vibrating rapidly providing the aircrew with a tactile warning of an impending stall condition.

No indications are currently known to exist which allow the pilot to effectively accomplish a pitch up maneuver without exceeding the maximum allowable angle of attack. Current stall warning devices, such as stick shakers, present no information during a pitch up maneuver until the selected angle of attack threshold is exceeded. Angle of attack indicators have technical potential in this regard, but are not operationally practical for use in a marginal performance situation near the ground. this is because an angle of attack indication is rarely used in commercial transport airplanes during normal opertions. Its use by the pilot would therefore be unlikely in the rare situation when a maximum lift capability maneuver is required. To fly out of such high stress situations, the pilot will normally rely on instruments that he is accustomed to using in routine situations.

Displaying a computed stall warning airspeed, or any other airspeed based on stall, on the airspeed instrument is another means by which the maximum allowable lift capability could theoretically be used by the pilot. However, this concept has the following disadvantages, namely 1) stall speed varies as the square of load factor which causes stall speed to change rapidly during pitch maneuvers making it a difficult parameter to control or to avoid, and 2) a pilot cannot control speed directly; only acceleration and deceleration can be controlled directly by varying pitch attitude and thrust.

A stall warning device is disclosed in U.S. Patent No. 3,686,936--by Daudt, Jr. The instrument includes a first scale calibrated in degrees of angle of attack together with corresponding pointer which points to a location on the scale to indicate the current angle of attack of the aircraft. A second Mach number scale located adjacent to the angle of attack scale indicates the Mach number corresponding to the angle of attack at which stall buffet will begin.

In Lear, U.S. Patent No. 2,942,233, there is disclosed an instrument for indicating the pitch attitude of an aircraft, and the relationship of aircraft position to a radio beam defining a selected glide slope.

In U.S. Reissue Patent No. 31,159 by Sicre, there is disclosed an aircraft instrument for guiding the aircrew during takeoff and landing approach go-around. The instrument includes a horizontal bar which is displaced relative to an aircraft symbol at a distance which is a function of a generated error signal representative of the difference between an aerodynamic flight path angle and a desired flight path angle.

The above disadvantages are overcome with the features as described in the characterizing part of claim 1.

### SUMMARY OF THE INVENTION

The embodiments of the present invention described more fully hereinafter pertain to apparatus and methods for displaying symbols on an aircraft attitude indicator to provide the aircrew with a continuous visual indication of aircraft attitude and the relationship of the current aircraft angle of attack to that angle of attack where onset of stall warning occurs. The attitude indicator includes a symbolic presentation of the position of the aircraft along pitch and roll axes relative to the horizon. Incremental pitch scale lines are also displayed which define the orientation of the aircraft in degrees of upward or downward pitch attitude. The attitude indicator, in association with the present invention, includes a pitch limit symbol which is located above the aircraft symbol a distance which is a function of a calculated margin between the current angle of attack of the aircraft, and that angle of attack which causes onset of stall warning. The pitch limit symbol provides the pilot with a visual indication of the margin to the onset of stall warning in relation to aircraft pitch attitude. During maneuvers requiring pitch attitude control in a flight region near stall warning, the pilot by observing the primary attitude indicator, can observe the pitch attitude of the aircraft in relation to a visual margin between current aircraft angle of attack and angle of attack at which onset of stall warning occurs. Therefore, in a situation such as low altitude windshear where it may be desirable to obtain maximum amount of lift, the aircraft pilot by observing the integrated display of the present invention, is provided with information of stall warning margin in relation to aircraft pitch attitude. This allows the pilot to control the aircraft in a manner to obtain, if necessary, a maximum amount of aircraft lift during a pitch up maneuver while maintaining an appropriate margin to stall.

In an exemplary embodiment, a flight path angle symbol is also displayed on the primary attitude indicator which represents the current flight path of the aircraft in relation to a horizon symbol. Typically, in situations requiring large pitch up maneuvers, a primary purpose is to obtain a positive rate of aircraft climb. Therefore, by observing the location of the aircraft symbol in relation to the pitch limit symbol and the location of the flight path angle symbol in relation to the horizon, the aircrew is provided with visual feedback for controlling aircraft pitch attitude in a manner to obtain a positive rate of climb while avoiding the onset of stall warning.

In another embodiment, the distance between the pitch limit symbol and the airplane symbol is reduced by a computed compensation factor when two concurrent flight conditions occur, namely when I) airspeed rate is calculated to be a negative amount thereby indicating decreasing aircraft airspeed, and 2) the pitch attitude of the aircraft is greater than a predetermined maximum expected pitch attitude. This is one method for reducing the distance between the pitch limit symbol and the airplane symbol, and other methods will be discussed in the Detailed Description.

It is therefore an object of the present invention to provide apparatus and methods for generating information related to aircraft attitude to aid in operating an aircraft within a recommended operational envelope.

## BRIEF DESCRIPTION OF THE DRAWINGS

These and other objects and advantages of the present invention will become more readily apparent upon reading the following detailed description and upon reference to the attached drawings in which:

Figure I is a representation of an aircraft primary attitude indicator including symbols representing the aircraft, the earth's horizon, degrees of aircraft pitch above and below the earth's horizon, degrees of aircraft roll, and a pitch limit indicating margin between current aircraft angle of attack and stall warning angle of attack;

FIG. 2 is a schematical representation of the components of the present invention;

FIG. 3 is a flow chart for determining an angle of attack margin between the current aircraft angle of attack and the angle of attack at which stall warning occurs to position the pitch limit symbol relative to the aircraft symbol on the display;

FIG. 4 is a representation of an exemplary embodiment of the display including flight path angle and pitch limit symbols;

FIG. 5 is a diagrammatic representation of aircraft pitch attitude in relation to the horizon illustrating flight path angle $\gamma$, pitch attitude $\theta$, and airplane angle of attack $\alpha$;

FIG. 6 is a flow chart disclosing the functional steps for calculating flight path angle in order to display the flight path angle symbol relative to the horizon symbol; and

FIG. 7 is a flow chart disclosing one method of compensating the calculated angle of attack margin in order to reduce the vertical distance between the pitch limit symbol and the airplane symbol during certain aircraft flight conditions.

## DETAILED DESCRIPTION OF THE INVENTION

A stall situation may be encountered by an aircraft in an emergency in which the aircraft has entered high angle of attack condition. To maintain control of the aircraft, the aircrew must diagnose the nature of the emergency and make aircraft attitude corrections rapidly and accurately in accordance with their diagnosis. In such a situation, however, it is generally a tendency of the aircrew to rely on those flight instruments which are used under normal conditions by the aircrew in operating the aircraft. Typically an instrument often utilized when operating the aircraft is a primary attitude indicator which provides a symbolic representation of aircraft orientation along pitch and roll axes relative to the horizon. The primary attitude indicator is particularly useful when the earth's horizon cannot be seen, such as when the aircraft is flying in reduced visibility, or when the aircraft is operating at nose high attitude, e.g., during takeoff.

Presently, in larger commercial aircraft, stall warning devices are commonly provided in the cockpit to warn the aircrew of an impending stall condition. These warnings may take the form of an audio signal, a discrete "on/off" visual signal, or in the form of a mechanical stick shaker which vibrates the aircraft control column rapidly to provide a tactile indication of impending stall through the pilot's hands and arms. The present invention provides a visual indication superimposed on the primary attitude indicator of a margin between current aircraft angle of attack and angle of attack at onset of stall warning, and hereinafter referred to as the angle of attack margin. This margin is visually displayed by the location of a pitch limit symbol relative to the airplane symbol on a conventional aircraft attitude indicator.

Referring to FIG. I, a preferred embodiment of the present invention is shown in which a pitch limit symbol 40 is displayed on an attitude indicator 20. In order to better understand the present invention and the relationship of pitch limit symbol 40 to the attitude indicator 20, a conventional attitude indicator is described in further detail. The attitude display is generated on a cathode ray tube (CRT) screen 22 located in the cockpit of the aircraft. The display includes an airplane symbol 24 having a pair of spaced apart left and right horizontal components 26, and vertical components 28 projecting vertically downward at an inner end of each horizontal component 26. A center marker 27 is located between horizontal components 26 and longitudinally aligned therewith to represent the longitudinal centerline of the aircraft. Together with airplane symbol 24, the display provides aircraft pitch and roll attitude information in conjunction with a line 30 representing the location of the earth's horizon relative to airplane symbol 24. A plurality of lines 32 located in a parallel manner above and below horizon line 30 represent the degrees of pitch attitude of the aircraft above or below the horizon. Pitch lines 32 display a current pitch attitude of the aircraft when center marker 27 is aligned with the corresponding pitch line 32. To display aircraft roll information, horizon line 30 and pitch lines 32 rotate in the plane of FIG. I thereby producing an indication of pitch and roll attitude relative to the aircraft symbol 24. A roll pointer symbol 34 indicates the number of degrees of aircraft bank at dial indices 36 located about the upper perimeter of the display. It is to be understood that the aforementioned elements of the conventional attitude indicator are known in the art. They are described herein to provide an understanding of the unique manner in which the limit display of the present invention operates in conjunction with the aforementioned element of the attitude indicator to define an aircraft operating margin.

In accordance with the present invention, a visual indication of the relationship of the aircraft attitude to the onset of stall warning is provided by pitch limit symbol 40. Pitch limit symbol 40 has a configuration somewhat similar to airplane symbol 24 so that it is clear to the pilot that the pitch limit symbol 40 and the airplane symbol 24 are related. Specifically, pitch limit symbol 40 includes a left linear horizontal component 44 which is located above and parallel to the left horizontal component 26 of aircraft symbol 24, and a right linear horizontal component 44 which is located above and parallel to the right horizontal component 26 of aircraft symbol 24. The horizontal components 44 include respective vertical components 46 which project vertically downward from the respective inner ends of the horizontal components 44 and which vertically align with inner vertical surfaces of vertical components 28. A plurality of diagonal lines 48 project upward from horizontal components 44. The location on the pitch limit symbol 40 which corresponds to the limit is clearly established by the shape of all the components of the pitch limit symbol 40. Specifically, the horizontal component 44 defines a definite lower border, while the diagonal lines 48 define an indeterminate upper border. This makes it clear to the pilot that the pitch limit symbol 40 has only one location corresponding to one limit, and that all locations above the horizontal component 44 are beyond the limit.

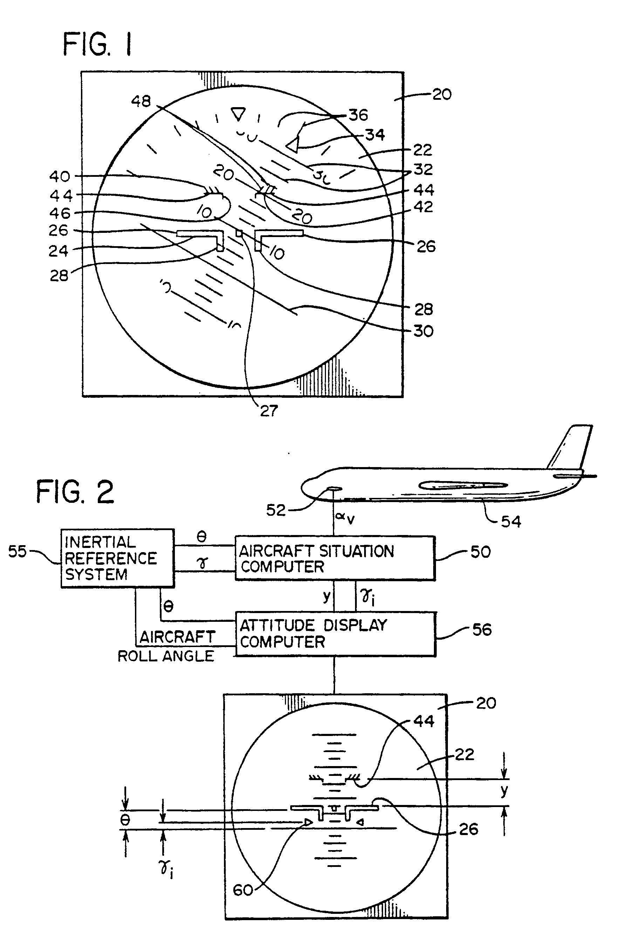

In operation, as the aircraft pitches up, horizon line 30 and pitch lines 32 move downward relative to the center of the airplane symbol 24. As the aircraft rolls, horizon line 30 and pitch lines 32 rotate about a center of the airplane symbol 24. The parallel orientation of pitch limit symbol 40 relative to aircraft symbol 24 remains the same, however a distance y (FIG. 2) between the top surfaces of horizontal components 26, and the bottom surfaces of horizontal components 44, varies in order to reflect the angle of attack margin relative to stall warning. Thus, as the angle of attack of the aircraft begins to increase for any reason, the distance y decreases indicating the approach of the aircraft to the onset of stall warning. By observing the attitude indicator, the aircrew is aware simultaneously of the attitude of the aircraft and the angle of attack margin to stall warning. This visual feedback allows the aircrew to control the aircraft near stall warning while maintaining the aircraft in an operational flight envelope.

In the present invention, the pitch limit varies linearly with load factor making it less sensitive to pitch excursions than stall warning speed. In addition, pitch attitude can be controlled directly by the pilot. Therefore, presentation of the pitch limit on the attitude indicator generates a familiar indication to the pilot, and its use will be likely, even in high stress situations. Pitching the airplane up while avoiding stall warning will therefore be easier and more quickly accomplished using the computed pitch limit indication than it would be if either stall warning speed or pure angle of attack were the indicated parameters.

In order to position the pitch limit symbol 40 relative to aircraft symbol 24 to indicate the margin to stall warning onset, the present invention includes an aircraft situation computer 50 shown in FIG. 2, which receives sensed signal inputs from an angle of attack sensor having a movable vane 52 connected to an exterior location of an aircraft 54. Movable vane 52 is a small airfoil which pivots relative to the incoming airflow to measure the angle of attack of the airflow relative to the aircraft 54. A digital computer 50 stores the functional algorithms utilized in performing the necessary calculations to locate the position of pitch limit symbol 40 with respect to airplane symbol 24 as well as other flight condition displays to be described hereinafter. An inertial reference system 55 provides inputs of pitch attitude $\theta$ and inertial flight path angle $\gamma$ to the aircraft situation computer 50. Pitch and roll attitude information is fed from the inertial reference system 55 to an attitude display computer 56. Attitude display computer 56 is interfaced between the computer 50 and the primary attitude indicator 20 to generate the necessary symbols in response to inputs from inertial reference system 55 and computer 56 to create the visual display at CRT screen 22 described previously.

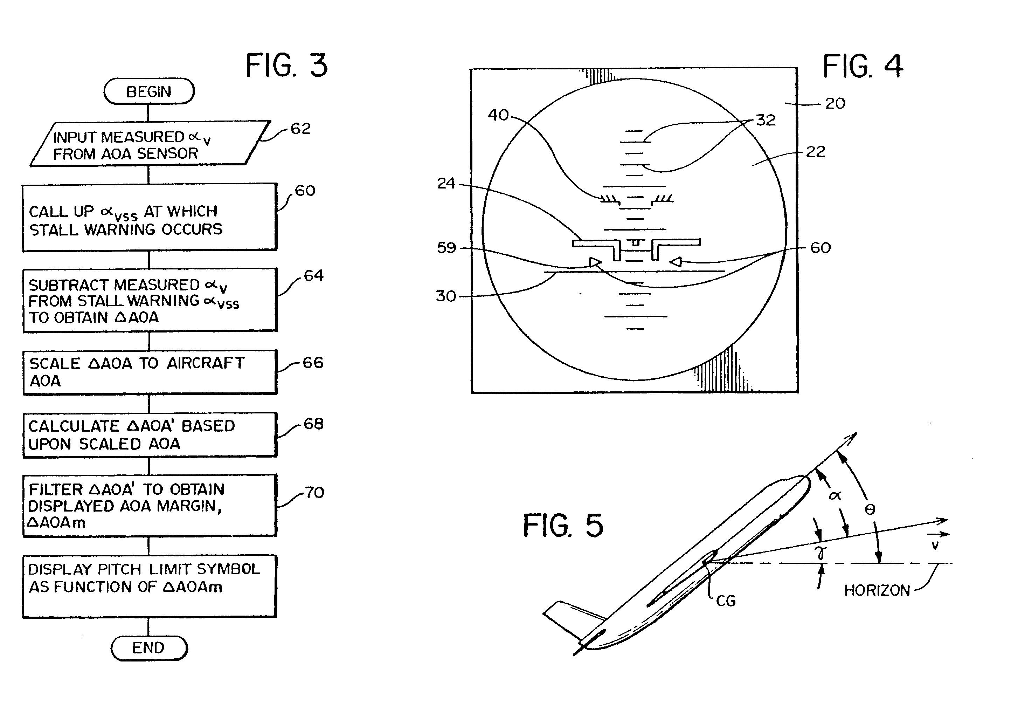

Positioning of pitch limit symbol 40 relative to aircraft symbol 24 is accomplished in accordance with the functional steps shown in FIG. 3 which are stored in the memory of computer 50. A vane angle of attack $\alpha_{vss}$, which represents an angle of attack at which the onset of stall warning is scheduled to occur for various airplane configurations or other parameters, is programmed into the memory of computer 50 at flow block 60. Measured values of current aircraft vane angle of attack $\alpha_v$ which are obtained from the angle of attack indicator 52 at flow block 62, are subtracted from the stored values of $\alpha_{vss}$ to generate an angle of attack differential ($\Delta AOA$) at flow block 64. $\Delta AOA$ represents the

difference between the angle of attack of airflow at vane 52, and the vane angle of attack at the onset of stall warning. The angle of attack measured at vane 52 may vary in a known manner from the angle of attack of airflow at aircraft 54 due to the shape or other characteristics of the airplane, as well as the location of sensor 52. This relationship is stored in memory and used to scale the calculated $\Delta AOA$ at flow block 66 to generate a scaled angle of attack differential $\Delta AOA'$ at flow block 68. Furthermore, to eliminate distractive transient signals such as when the aircraft 54 enters turbulence, the calculated angle of attack differential $\Delta AOA'$ is filtered at block 70 in accordance with a filtering term $1/(\tau s + 1)$ where $\tau$ is the time constant of the filter. The resulting value, $\Delta AOA_m$, constitutes the distance between the lower edge of pitch limit symbol 40 and the upper edge of the airplane symbol 24, and is displayed at CRT screen 24 in the same scaling (degrees/inch) as pitch attitude.

In association with the pitch limit symbol 40 at CRT screen 22, it is useful to provide a visual indication to the pilot whether the aircraft is achieving a positive or negative flight path angle. In an exemplary embodiment of the present invention, the display at CRT screen 22 includes flight path angle symbol 59 shown in FIG. 4.

Flight path angle symbol 59 is defined by a pair of triangles 60 which are positioned above horizon line 30 when indicating a positive flight path angle, i.e. aircraft climb flight path, and positioned below horizon line 30 when indicating a negative flight path angle, i.e. an aircraft descent flight path. The relationship of flight path angle $\gamma$ to angle of attack $\alpha$ and aircraft pitch attitude $\theta$ is shown in FIG. 5 for a non-moving airmass wherein flight path angle $\gamma$ is an angle formed by the intersection of the earth's horizon and a vector $\vec{v}$ representing the velocity of the aircraft through the aircraft's center of gravity. Angle of attack $\alpha$ is defined as that angle formed by the intersection of velocity vector $\vec{v}$ and the pitch attitude $\theta$ of the aircraft.

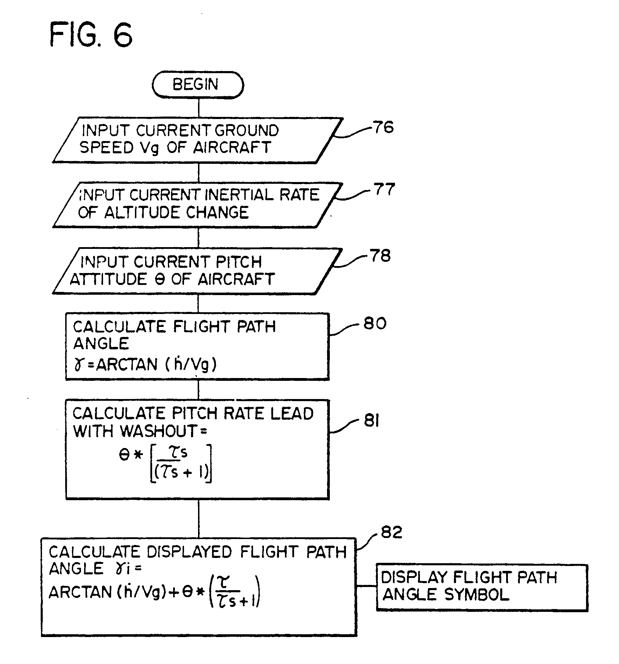

The display of flight path angle symbol 59 is generated in accordance with the functional steps disclosed in the flow chart in FIG. 6. Initially inputs are made at flow blocks 76 through 78 of aircraft ground speed ($V_g$) which is retrieved from an inertial reference computer onboard aircraft 54, as well as 1) a change of aircraft altitude as a function of time, (inertial altitude rate, $\dot{h} = dh/dt$ ), and 2) current aircraft pitch attitude $\theta$. Flight path angle $\gamma$ is then calculated at block 80 by the known relationship $\gamma = \arctan (\dot{h}/ V_g)$ . Due to an inherent lag between a pitch change and a resultant flight path angle change, generation of displayed flight path angle symbol 59 includes a pitch rate lead term which in LaPlace notation is defined at block 81 as $\theta[\tau s/(\tau s + 1)]$ . The resulting displayed flight path angle equation at block 82 is

$$\gamma = \text{arctan} \ (\dot{h}/Vg) + \theta[\tau s/(\tau s + 1)] \ .$$

The combination of pitch limit symbol 40 and inertial flight path angle symbol 59 provide information to the pilot at attitude indicator 20 to enable the aircraft to be controlled in those situations, e.g., wind shear at low altitude, where large pitch changes to achieve a maximum amount of lift may be necessary to avoid ground contact. In the event of such a situation, the aircraft pitch attitude is adjusted in an upward direction. As the aircraft responds to the pitch command and the angle of attack differential ΔAOA' decreases, the distance between the pitch limit symbol 40 and the aircraft symbol 24 begins to decrease (FIG. I). In association with the increase in pitch attitude observed on the primary attitude indicator 20, the aircrew, by observing the flight path angle symbol 59, can determine when a positive flight path of aircraft 54 is achieved. The flight of the aircraft 54 therefore is controlled in a manner by observing i) the position of aircraft symbol 24 relative to horizon line 30 and pitch lines 32, ii) the position of aircraft symbol 24 relative to pitch limit symbol 40, and iii) the position of flight path angle symbol 59 relative to horizon symbol 30. This allows the pilot to achieve a position flight path while avoiding the onset of stall warning. It is a unique feature of the present invention that the angle of attack margin and attitude information is present on a single instrument in the aircraft cockpit, and that the margin is displayed relative to the attitude indicator. In this way, the angle of attack limit display is directly related to the pilot's control task, i.e. controlling aircraft attitude.

In another embodiment of the present invention the angle of attack margin ΔAOA_m is reduced by a predetermined amount by adding an additional compensating term to the calculated angle of attack margin ΔAOA_m. Thus, ΔAOA_m, which is a function of the difference between aircraft angle of attack and stall warning onset angle of attack, is greater than a displayed angle of attack margin corrsponding to the distance between the pitch limit symbol 40 and the aircraft symbol 24. The resulting display may be used to discourage operation of the aircraft at inappropriate or abnormal pitch attitudes. Compensation is achieved by reducing ΔAOA_m an amount, $k(\theta - x) \ {}^{*} \ (\dot{V}_{ac})$ , where $\dot{V}_{ac}$ = aircraft airspeed rate (true airspeed rate, calibrated airspeed rate or indicated airspeed rate), x is a maximum expected normal pitch attitude, and k = a constant when $\theta > x$ and $\dot{V}_{ac}$ is nega-

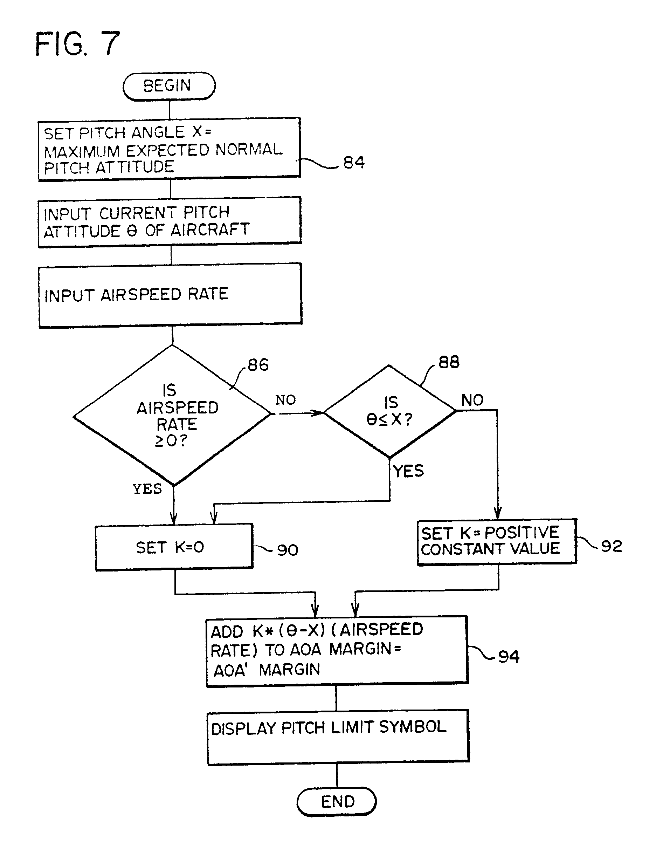

tive; otherwise k = 0 when $\theta < x$, or when $\dot{V}_{ac}$ is positive. This compensating term has the effect of decreasing the distance between the pitch limit symbol 40 and aircraft symbol 24 in the event that both I) airspeed rate is negative, and 2) the pitch attitude of the aircraft exceeds a predetermined pitch attitude. This is achieved in accordance with the flow chart in FIG. 7 by initially determining a maximum expected normal pitch attitude x at flow block 84. Preferably, maximum expected normal pitch attitude is equivalent to a pitch attitude which corresponds to the recommended takeoff pitch attitude of the aircraft at a minimum gross weight, and which is indicative of the maximum pitch attitude which would be likely encountered in normal aircraft operations. If airspeed rate is found to be greater than or equal to zero at decision block 86, or if the current pitch attitude θ is found to be less than the maximum expected normal pitch attitude x at decision block 88, then k is set equal to zero at block 90 and the compensating term has no effect. On the other hand, if airspeed rate is a negative value indicating an aircraft flight condition where airspeed is decreasing, and if the actual pitch attitude of the aircraft is creater than x, then k is set equal to a predetermined constant value at block 92. The constant k is multiplied by the amount that the current pitch attitude of the aircraft exceeds the expected pitch attitude at block 94, and the resulting product is multiplied by airspeed rate. This has the effect of reducing ΔAOA_m by an amount proportional to the airspeed rate, if negative, and by the amount which the pitch attitude exceeds the maximum normal expected pitch attitude.

The distance between aircraft symbol 24 and pitch limit symbol 40 also may be reduced by a linear compensation term $k \ (\theta - x)$ , or a nonlinear compensation term, $k(\theta - x)^2$ , where k, θ and x are values defined previously, and similar logic is used to set k = 0 or k equal to a constant.

Instead of the aforementioned compensation terms, logic may be incorporated into the pitch limit calculation which causes the pitch limit never to be displayed higher than a pre-determined pitch attitude. In other words, the distance between limit symbol 40 and the airplane symbol 24 is never allowed to exceed the difference between a predetermined pitch attitude and the current aircraft pitch attitude. In this case. the pilot may be instructed that the pitch limit symbol indicates margin to stall warning, but it also may indicate a maximum allowable pitch attitude regardless of margin to stall warning.

## Claims

1. Aircraft attitude display apparatus (20) comprising a first symbol (24) at a first location indicating a current aircraft attitude, characterized by means for displaying a second, pitch limit symbol (40) positioned relative to said first symbol (24) at varying predetermined locations to provide a visual indication of the margin to onset of a stall condition in relation to aircraft pitch attitude, and control means for moving said second symbol (40) relative to said first symbol (24) in a manner that a distance between said symbols is a function of the difference between the current angle of attack ($\alpha$) and the angle of attack at which said stall warning indication occurs.

2. Aircraft attitude display apparatus as set forth in claim 1 wherein said control means operates in a manner that an actual margin between said current angle of attack ($\alpha$) and said warning indication of angle of attack is greater than a displayed margin corresponding to said distance between the first symbol and the second symbol.

3. Aircraft attitude display apparatus as set forth in claim 1 wherein said control means operates in a manner that in the event of a first location of said first symbol and said second location of said second symbol generally coincide, a computed margin remains between said aircraft current angle of attack and said angle of attack at which said stall warning indication occurs.

4. Aircraft attitude display apparatus as set forth in claim 3 wherein said actual margin is greater than said displayed margin when an airspeed rate of said aircraft is negative and a pitch attitude of said aircraft exceeds a predetermined attitude.

5. Aircraft attitude display apparatus as set forth in claim 5 wherein a difference between said actual margin and said displayed margin is defined by a term $k(\theta - x)$ * $\dot{V}_{ac}$, where k = constant when $\theta > x$ and $\dot{V}_{ac}$ is negative; otherwise k = 0 when $\theta < x$, or when $\dot{V}_{ac}$ is positive, $\theta$ = said aircraft current pitch attitude, x = said predetermined pitch attitude, and $\dot{V}_{ac}$ = said aircraft current airspeed rate.

6. Aircraft attitude display apparatus as in claim 6 wherein a difference between said actual margin and said displayed margin is defined by a term $k(0 - x)$, where k = constant, $\theta$ = said aircraft current pitch attitude, and x = said predetermined pitch attitude.

7. Aircraft attitude display apparatus as in claim 6 wherein a difference between said actual margin and said displayed margin is defined by a term $k(\theta - x)^2$ where k = constant, $\theta$ = said aircraft current pitch attitude, and x = said predetermined pitch attitude.

8. Aircraft attitude display apparatus as set forth in claim 1 wherein said informational display means includes means for displaying a horizon reference (30) relative to said first symbol to indicate said current attitude of said aircraft.

9. Aircraft attitude display apparatus as set forth in claim 9 wherein a distance between said horizon reference (30) and said second symbol (40) does not exceed a predetermined amount.

10. Aircraft attitude display apparatus as set forth in claim 1 wherein said second symbol (40) has a shape similar to a shape of said first symbol (24) to establish a visual relationship between said first symbol (24) and said second symbol (40).

11. Aircraft attitude display apparatus as set forth in claim 11 wherein said second symbol (40) has a shape which provides a visual indication that said stall condition corresponds to a first location on the first symbol (24) and that locations above the first location are beyond said stall warning condition.

12. Aircraft attitude display apparatus as set forth in claim 1 additionally comprising means for displaying a third symbol (59) relative to said horizon reference (30) to represent an aircraft climb and descent condition.

## Revendications

1. Dispositif d'affichage d'orientation d'avion (20) comprenant un premier symbole (24) à un premier emplacement indiquant une orientation courante de l'avion, caractérisé par des moyens destinés à l'affichage d'un deuxième symbole d'assiette limite (40) positionné par rapport au dit premier symbole (24) à des emplacements prédéterminés variables afin de fournir une indication visuelle de la marge par rapport au début d'un avertissement de décrochage en liaison avec l'assiette de l'avion, et des moyens de commande destinés à déplacer le dit deuxième symbole (40) par rapport au dit premier symbole (24) d'une manière telle qu'une distance entre les dits symboles est une fonction de la différence entre l'angle

d'incidence courant ($\alpha$) et l'angle d'incidence pour lequel la dite indication d'avertissement de décrochage se produit.

2. Dispositif d'affichage d'orientation d'avion selon la revendication 1, dans lequel les dits moyens de commande fonctionnent d'une manière telle qu'une marge réelle entre le dit angle d'incidence courant ($\alpha$) et la dite indication d'avertissement d'angle d'incidence est supérieure à une marge affichée correspondant à la dite distance entre le premier symbole et le deuxième symbole.

3. Dispositif d'affichage d'orientation d'avion selon la revendication 1, dans lequel les dits moyens de commande fonctionnent d'une manière telle que, dans le cas où un premier emplacement du dit premier symbole et le dit deuxième emplacement du dit deuxième symbole coïncident, une marge calculée reste entre le dit angle d'incidence courant et le dit angle d'incidence pour lequel la dite indication d'avertissement de décrochage se produit.

4. Dispositif d'affichage d'orientation d'avion selon la revendication 3, dans lequel la dite marge réelle est supérieure à la dite marge affichée lorsqu'une accélération du dit avion est négative et qu'une assiette du dit avion dépasse une orientation prédéterminée.

5. Dispositif d'affichage d'orientation d'avion selon la revendication 5, dans lequel une différence entre la dite marge réelle et la dite marge affichée est définie par un terme $k(\theta - x)$ * $V_{ac}$, où $k$ = constante lorsque $\theta > x$ et $V_{ac}$ est négative; autrement $k$ = 0 lorsque $0 < x$, ou lorsque $V_{ac}$ est positive, $\theta$ = la dite assiette courante de l'avion, $x$ = la dite assiette prédéterminée, et $V_{ac}$ = la dite accélération courante de l'avion.

6. Dispositif d'affichage d'orientation d'avion selon la revendication 6, dans lequel une différence entre la dite marge réelle et la dite marge affichée est définie par un terme $k(\theta - x)$, où $k$ = constante, $\theta$ = la dite assiette courante de l'avion, et $x$ = la dite assiette prédéterminée.

7. Dispositif d'affichage d'orientation d'avion selon la revendication 6, dans lequel une différence entre la dite marge réelle et la dite marge affichée est définie par un terme $k(\theta - x)^2$, où $k$ = constante, $\theta$ = la dite assiette courante de l'avion, et $x$ = la dite assiette prédéterminée.

8. Dispositif d'affichage d'orientation d'avion selon la revendication 1, dans lequel les dits moyens d'affichage d'information comprennent des moyens destinés à afficher une référence d'horizon (30) par rapport au dit premier symbole afin d'indiquer la dite orientation courante du dit avion.

9. Dispositif d'affichage d'orientation d'avion selon la revendication 9, dans lequel une distance entre la dite référence d'horizon (30) et le dit deuxième symbole (40) ne dépasse jamais une valeur prédéterminée.

10. Dispositif d'affichage d'orientation d'avion selon la revendication 1, dans lequel le dit deuxième symbole (40) a une forme similaire à la forme du dit premier symbole (24) afin d'établir une relation visuelle entre le dit premier symbole (24) et le dit deuxième symbole (40).

11. Dispositif d'affichage d'orientation d'avion selon la revendication 11, dans lequel le dit deuxième symbole (40) a une forme qui fournit une indication visuelle que la dite condition de décrochage correspond à un premier emplacement sur le premier symbole (24) et que les emplacements au dessus du premier emplacement sont au delà de la dite condition d'avertissement de décrochage.

12. Dispositif d'affichage d'orientation d'avion selon la revendication 1, comprenant de manière additionnelle des moyens destinés à afficher un troisième symbole (59) par rapport à la dite référence d'horizon (30) afin de représenter une condition de montée et de descente de l'avion.

**Ansprüche**

1. Flugzeug-Fluglage-Sichtwiedergabeeinrichtung (20) umfassend ein erstes Symbol (24) an einer ersten Stelle, das eine gegenwärtige Flugzeug-Fluglage anzeigt, gekennzeichnet durch eine Einrichtung für die Sichtwiedergabe eines Längsneigungsgrenzensymbols (40), da relativ zu dem ersten Symbol (24) an varrierenden vorbestimmten Stellen positioniert ist, um eine visuelle Anzeige der Grenze des Einsatzes eines Überziehungszustands in Relation zu der Flugzeug-Längsneigungs-Fluglage zu liefern, und eine Steuer- bzw. Regeleinrichtung zum Bewegen des zweiten Symbols (40) relativ zu dem ersten Symbol (24) in einer Art und Weise, daß ein Abstand zwischen den Symbolen eine Funktion der Differenz zwischen dem gegen-wärtigen Anstellwinkel ($\alpha$) und dem Anstellwinkel, bei dem Überziehungswarnungsanzeige auftritt, ist.

2. Flugzeug-Fluglage-Sichtwiedergabeeinrichtung nach Anspruch 1, worin die Steuer- bzw.Regeleinrichtung in einer Art und Weise arbeitet, daß eine aktuelle Grenze zwischen dem gegenwärtigen Anstellwinkel ($\alpha$) und der Warnungsanzeige des Anstellwinkels größer als eine in Sichtwiedergabe dargestellte Grenze ist, die dem Abstand zwischen dem ersten Symbol und dem zweiten Symbol entspricht.

3. Flugzeug-Fluglage-Sichtwiedergabeeinrichtung nach Anspruch 1, worin die Steuer - bzw. Regeleinrichtung in einer Art und Weise arbeitet, daß in dem Fall, in welchem eine erste Stelle des ersten Symbols und die zweite Stelle des zweiten Symbols generell übereinstimmen, eine berechnete Grenze zwischen dem gegenwärtigen Anstellwinkel des Flugzeugs und dem Anstellwinkel, bei dem die Überziehungswarnungsanzeige auftritt, bleibt.

4. Flugzeug-Fluglage-Sichtwiedergabeeinrichtung nach Anspruch 2, worin die aktuelle Grenze größer als die in Sichtwiedergabe dargestelle Grenze ist, wenn eine Eigengeschwindigkeitsrate des Flugzeugs negativ ist und eine Längsneigungs-Fluglage des Flugzeugs eine vorbestimmte Fluglage überschreitet.

5. Flugzeug-Fluglage-Sichtwiedergabeeinrichtung nach anspruch 4, worin eine Differenz zwischen der aktuellen Grenze und der in Sichtwiedergabe dargestellten Grenze definiert ist durch eine Größe k(0-x)$^*$ $\dot{V}_{ac}$, worin k = konstant, wenn $\theta$ > x und $\dot{V}_{ac}$ negativ ist; andernfalls k = 0 wenn $\theta$ < x, oder wenn $\dot{V}_{ac}$ positiv ist, $\theta$ = die gegenwärtige Längsneigungsfluglage des Flugzeugs, x = die vorbestimme Längsneigungsfluglage, und $\dot{V}_{ac}$ = die gegenwärtige Eigengeschwindigkeitsrate des Flugzeugs.

6. Flugzeug-Fluglage-Sichtwiedergabeeinrichtung nach Anspruch 4, worin eine Differenz zwischen der aktuellen Grenze und der in Sichtwiedergabe dargestellten Grenze definiert ist durch eine Größe k($\theta$ - x ) , worin k = konstant, $\theta$ = die gegenwärtige Längsneigungsfluglage des Flugzeugs, und x = die vorbestimmte Längsneigungsfluglage.

7. Flugzeug-Fluglage-Sichtwiedergabeeinrichtung nach Anspruch 4, worin eine Differnz zwischen der aktullen Grenze und der in Sichtwiedergabe dargestellten Grenze definiert ist durch eine Größe k($\theta$ - x )$^2$, worin k = konstant, $\theta$ = die gegenwärtige Längsneigungsfluglage des Flugzeugs, und x = die vorbestimmte Längsneigungsfluglage.

8. Flugzeug-Fluglage-Sichtwiedergabeeinrichtung nach Anspruch 1, worin die informatorische Sichtwiedergabeeinrichtung eine Einrichtung zur Sichtwiedergabe einer Horizontreferenz (30) relativ zu dem ersten Symbol zum Anzeigen der gegenwärtigen Fluglage des Flugzeugs aufweist.

9. Flugzeug-Fluglage-Sichtwiedergabeeinrichtung nach Anspruch 8, worin ein Abstand zwischen der Horizontreferenz (30) und dem zweiten Symbol (40) einen vorbestimmten Betrag nicht übersteigt.

10. Flugzeug-Fluglage-Sichtwiedergabeeinrichtung nach Anspruch 1, worin das zweite Symbol (40) eine Form hat, die ähnlich der Form des ersten Symbols (24) ist, um eine visuelle Beziehung zwischen dem ersten Symbol (24) und dem zweiten Symbol (40) herzustellen.

11. Flugzeug-Fluglage-Sichtwiedergabeeinrichtung nach Anspruch 10,worin das zweite Symbol (40) eine Form hat, welche eine visuelle Anzeige liefert, daß der Überziehungszustand einer ersten Stelle auf dem ersten Symbol (24) entspricht und daß Stellen oberhalb der ersten Stelle jenseits des Überziehungswarnungszustands sind.

12. Flugzeug-Fluglage-Sichtwiedergabeeinrichtung nach Anspruch 1, die zu sätzlich eine Einrichtung zur Sichtwiedergabe eines dritten Symbols (59) relativ zu der Horizontreferenz (30) zum Repräsentieren eines Flugzeugsteigflug-und-sinkflugzustands umfaßt.

## FIG. 1

## FIG. 2

INERTIAL REFERENCE SYSTEM — 55

AIRCRAFT SITUATION COMPUTER — 50

ATTITUDE DISPLAY COMPUTER — 56

AIRCRAFT ROLL ANGLE

$\theta$

$\gamma$

$\alpha_v$

$y$ $\gamma_i$

52

54

20

44

22

26

60

10

## FIG. 4

## FIG. 5

## FIG. 3

BEGIN

INPUT MEASURED $\alpha_V$ FROM AOA SENSOR — 62

CALL UP $\alpha_{VSS}$ AT WHICH STALL WARNING OCCURS — 60

SUBTRACT MEASURED $\alpha_V$ FROM STALL WARNING $\alpha_{VSS}$ TO OBTAIN $\Delta AOA$ — 64

SCALE $\Delta AOA$ TO AIRCRAFT AOA — 66

CALCULATE $\Delta AOA'$ BASED UPON SCALED AOA — 68

FILTER $\Delta AOA'$ TO OBTAIN DISPLAYED AOA MARGIN, $\Delta AOA_m$ — 70

DISPLAY PITCH LIMIT SYMBOL AS FUNCTION OF $\Delta AOA_m$

END

11

# FIG. 6

```
        ( BEGIN )
            │
  ╱ INPUT CURRENT GROUND    ╱──76
 ╱  SPEED Vg OF AIRCRAFT   ╱
            │
  ╱ INPUT CURRENT INERTIAL RATE ╱──77
 ╱  OF ALTITUDE CHANGE        ╱
            │
  ╱ INPUT CURRENT PITCH     ╱──78
 ╱  ATTITUDE θ OF AIRCRAFT ╱
            │
 ┌──────────────────────┐
 │ CALCULATE FLIGHT PATH │──80
 │ ANGLE                 │
 │ γ = ARCTAN ( ḣ/Vg )   │
 └──────────────────────┘
            │
 ┌──────────────────────┐
 │ CALCULATE PITCH RATE LEAD │──81
 │ WITH WASHOUT =        │
 │                       │
 └──────────────────────┘
            │
 ┌──────────────────────┐
 │ CALCULATE DISPLAYED FLIGHT PATH │──82
 │ ANGLE γi =            │
 │                       │      ┌──────────────────┐
 │                       │──────│ DISPLAY FLIGHT PATH │
 │                       │      │ ANGLE SYMBOL       │
 └──────────────────────┘      └──────────────────┘
```

Box 81:
$$\theta * \left[ \frac{\tau s}{(\tau s + 1)} \right]$$

Box 82:
$$\text{ARCTAN} (\dot{h}/Vg) + \theta * \left( \frac{\tau}{\tau s + 1} \right)$$

# FIG. 7

```
                    ┌─────────┐
                    │  BEGIN  │
                    └─────────┘
                         │
        ┌────────────────────────────────┐
        │ SET PITCH ANGLE X=              │
        │ MAXIMUM EXPECTED NORMAL         │──── 84
        │ PITCH ATTITUDE                  │
        └────────────────────────────────┘
                         │
        ┌────────────────────────────────┐
        │ INPUT CURRENT PITCH            │
        │ ATTITUDE θ OF AIRCRAFT         │
        └────────────────────────────────┘
                         │
        ┌────────────────────────────────┐
        │ INPUT AIRSPEED RATE            │
        └────────────────────────────────┘
                         │
```

IS AIRSPEED RATE $\geq 0$? — 86

NO → IS $\theta \leq X$? — 88

SET K=0 — 90

SET K= POSITIVE CONSTANT VALUE — 92

ADD $K*(\theta-X)$ (AIRSPEED RATE) TO AOA MARGIN = AOA' MARGIN — 94

DISPLAY PITCH LIMIT SYMBOL

END

13